(19) Europäisches Patentamt
European Patent Office
Office européen des brevets

(11) **EP 1 997 714 A1**

(12) **EUROPEAN PATENT APPLICATION**
published in accordance with Art. 158(3) EPC

(43) Date of publication:
**03.12.2008 Bulletin 2008/49**

(51) Int Cl.:
*B62D 6/00* (2006.01)   *B62D 5/04* (2006.01)
*B62D 101/00* (2006.01)   *B62D 113/00* (2006.01)
*B62D 117/00* (2006.01)   *B62D 119/00* (2006.01)
*H02P 21/00* (2006.01)   *H02P 27/04* (2006.01)

(21) Application number: **07738365.1**

(22) Date of filing: **13.03.2007**

(86) International application number:
**PCT/JP2007/054893**

(87) International publication number:
**WO 2007/108358 (27.09.2007 Gazette 2007/39)**

(84) Designated Contracting States:
**DE FR**

(30) Priority: **17.03.2006 JP 2006075222**

(71) Applicant: **NSK Ltd.**
**Tokyo 141-8560 (JP)**

(72) Inventors:
• **HISANAGA, Tomonori**
**Maebashi-shi, Gunma 3718527 (JP)**

• **NINOMIYA, Yoshiki**
**Maebashi-shi, Gunma 3718527 (JP)**
• **KANAI, Shinji**
**Maebashi-shi, Gunma 3718527 (JP)**

(74) Representative: **Klingseisen, Franz**
**Klingseisen & Partner**
**Postfach 10 15 61**
**80089 München (DE)**

(54) **ELECTRIC POWER STEERING DEVICE**

(57)  A electric power steering apparatus having a steering torque detecting unit for detecting a steering torque transmitted to the steering system; an electric motor for generating a steering assist force to give to the steering system; a motor control unit for controlling the electric motor based on at lease the steering torque. The apparatus comprises a motor stop condition detecting unit for detecting a condition to stop the electric motor while the electric motor is under control by the motor control unit; and an electromagnetic brake control unit over the electric motor in order to suppress a kick-back based on at least either one of a steering condition of the steering system and a running condition of the vehicle when a detection result by the motor stop condition detecting unit shows that a condition occurs to stop the electric motor.

EP 1 997 714 A1

**Description**

Technical Field

The present invention relates to an electric power steering apparatus having a steering torque detecting means for detecting a steering torque transmitted to a steering system; an electric motor for generating a steering assist force applied to the steering system; and a motor control means for controlling the electric motor based at least on the steering torque, wherein electromagnetic brake control is actuated when motor control is stopped while the electric motor is being controlled.

Background Art

In an electric power steering apparatus of this type, since a steering assist force generated by an electric motor is applied to the steering system, while the electric motor is generating a steering assist force, when control of the electric motor is stopped, the tire torsion force is released suddenly, giving rise to a so-called kick-back phenomenon that the steering wheel rotates in a direction opposite to the steering direction and a rotating force opposite to the steering force is transmitted to the steering wheel, with which the driver feels discomfort.

To solve the above problem, there has been proposed an electric power steering apparatus having a short-circuit means for short-circuiting between the terminals of the electric motor for a short time when it is necessary to stop the motor while the motor is generating a steering assist torque, wherein the short-circuit means estimates a recovery force for the torsion of the steering system by using a torsion recovery force estimating means, and short-circuits between the terminals when recovery force is equal to or more than a predetermined value (JP-B-3399226, for example).

Disclosure of the Invention

However, in prior art disclosed in the above patent document, it is arranged such that when it becomes necessary to stop the electric motor, a recovery force for the torsion of the steering system is estimated and an electromagnetic brake force is generated, but, for example, if an electromagnetic brake force is applied to the steering system when the car is steered quickly, the driver feels resistance to the steering action, making the driver uncomfortable, which is the problem yet to be solved.

Hence, the present invention has been made to overcome the unsolved problem and has as its object to provide an electric power steering apparatus configured to detect the steering condition and the running condition of the vehicle and generate optimum electromagnetic brake force when the electric motor is to be stopped while the motor is generating a steering assist force.

To achieve the above object, an electric power steering apparatus according to claim 1 having a steering torque detecting means for detecting a steering torque transmitted to the steering system; an electric motor for generating a steering assist force to give to the steering system; a motor control means for controlling the electric motor based on at lease the steering torque, comprising a motor stop condition detecting means for detecting a condition to stop the electric motor while the electric motor is under control by the motor control means; and an electromagnetic brake control means over the electric motor in order to suppress a kick-back based on at least either one of a steering condition of the steering system and a running condition of the vehicle when a detection result by the motor stop condition detecting means shows that a condition occurs to stop the electric motor.

In this invention according to claim 1, when the electric motor is stopped while the electric motor is generating a steering assist force to give to the steering system, electromagnetic brake control is performed on the electric motor so that a kick-back is suppressed based on at least either one of the steering condition of the steering system and the running condition of the vehicle, thus enabling an optimum electromagnetic brake force to be generated.

An electric power steering apparatus according to claim 2 is characterized in that, in the invention according to claim 1, the electromagnetic brake control means includes a running condition detecting means for detecting if the vehicle is in a straight running state or in a turning state, and if, according to a detection result by the running state detecting means, the vehicle is in a straight running state, the generation of the electromagnetic brake force is stopped or if the vehicle is in a turning state, the electromagnetic brake force is generated.

In this invention according to claim 2, if the vehicle is in a straight running state, since the electric motor is not generating a steering assist force for the steering system, a kick-back does not occur, so that the generation of the electromagnetic brake force that inhibits manual steering is stopped, and if the vehicle is in a turning state, since the electric motor is generating a steering assist force, a kick-back occurs, so that an electromagnetic brake force to securely prevent the kick-back is generated.

Further, an electric power steering apparatus according to claim 3 is characterized in that, in the invention according to claim 1 or 2, the electromagnetic brake control means further comprises a steering state detecting means for detecting which is the steering condition, turning said steering wheel away from the central position or returning said steering wheel back to the central position, and when the steering condition detected by said steering condition detecting means is steering back to the central position, electromagnetic brake control by a large electromagnetic brake force or when the detected steering condition is turning said steering wheel, electromagnetic brake control is performed by a small electromagnetic brake force, which is a smaller braking force than the steering condition is returning said steering wheel.

In this invention according to claim 3, when the steering system is in a state of steering away from the central position, since the kick-back causes a rotating force to act in a direction reverse to the steering direction, the kick-back is suppressed securely to unfailingly prevent the driver from feeling like being held up in steering.

On the other hand, when the steering system is in a state of steering back to the central position, since the kick-back causes a rotating force to act in the same direction as the steering direction, an electromagnetic brake force is generated in a way of reducing the kick-back, thus giving the driver the optimum steering comfort.

Further, an electric power steering apparatus according to claim 4 is characterized in that, in the invention according to any one of claims 1 to 3, the electromagnetic brake control means includes a steering velocity detecting means for detecting a steering velocity of the steering system, and controls the electromagnetic brake so that the electromagnetic brake force becomes weaker as the steering velocity detected by the steering velocity detecting means becomes faster.

In this invention according to claim 4, as the steering velocity becomes faster, the electromagnetic brake force acts as a force inhibiting steering, so that the electromagnetic brake force is decreased for steering to take priority over the reduction of the kick-back.

Further, an electric power steering apparatus according to claim 5 is characterized in that, in the invention according to any one of claims 1 to 4, the electromagnetic brake control means includes a turning radius detecting means for detecting a turning radius of the vehicle, and if, according to a detection result by the turning radius detecting means, the turning radius is small, controls the electromagnetic brake to generate a larger electromagnetic brake force than when the turning radius is large.

In this invention according to claim 5, when the turning radius is large, since only a small steering torque is required, a required steering assist force is reduced and the kick-back amount is reduced, so that the electromagnetic brake force is decreased, thus allowing steering to take priority over kick-back suppression, or when the turning radius is small, a large steering torque is required and a large steering assist force is required, so that the electromagnetic brake force is increased to thereby securely prevent the kick-back.

The electric power steering apparatus according to claim 6 is characterized in that, in the invention according to any one of claims 1 to 5, the electromagnetic brake control means releases electromagnetic brake control when electronic brake control has passed a predetermined length of time or when the detection result by the motor stop condition detecting means shows that a condition occurs that specifies that the electric motor is not to be stopped.

In this invention according to claim 6, by putting a limit to a time of continuing electromagnetic brake control, the electromagnetic brake force is prevented from inhibiting manual steering.

According to the present invention, when the electric motor is stopped while the electric motor is generating a steering assist force for the steering system, at least either one of the running condition of the vehicle and the steering condition of the steering system is detected, electromagnetic brake control over the electric motor is performed in a manner of suppressing the kick-back based on at least either one of the detected running condition and steering condition, effects can be obtained such that the optimum electromagnetic brake force is generated based on at least either one of the running condition and the steering condition and the driver can get a pleasant steering sensation.

Brief Description of the Drawings

FIG. 1 is a general configuration diagram showing an embodiment of the present invention.
FIG. 2 is a block diagram showing an example of a steering assist control unit.
FIG. 3 is a block diagram showing a specific configuration of control arithmetic unit 23 in FIG. 2.
FIG. 4 is a characteristic diagram showing a calculation map for a steering assist current command value.
FIG. 5 is a block diagram showing a specific configuration of a d-axis command current calculating unit.
FIG. 6 is a flowchart showing an example of a d-q axis voltage calculating process.
FIG. 7 is a characteristic diagram showing a d-q voltage calculation map.
FIG. 8 is a characteristic diagram showing an induced voltage waveform generated by a 3-phase brushless motor.
FIG. 9 is a flowchart showing an example of pulse-width-modulated signal forming process.
FIGS. 10A and 10B are the characteristic diagrams showing an electromagnetic brake force calculation map.

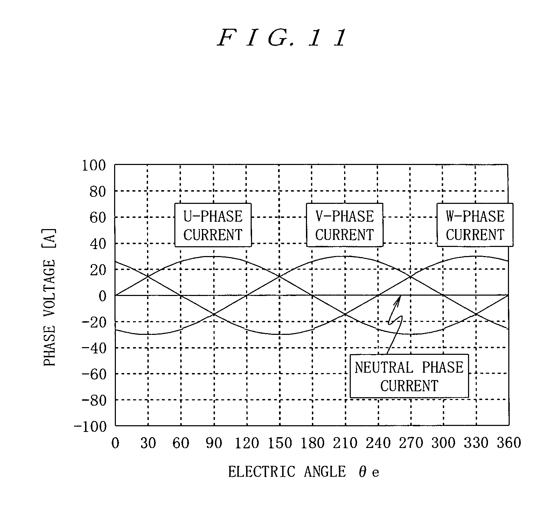

FIG. 11 is a characteristic diagram showing phase current waveforms of a 3-phase brushless motor.
FIG. 12 is a block diagram showing another example of the control arithmetic unit in the present invention.

FIG. 13 is a circuit diagram showing another example of a motor drive circuit.

FIG. 14 is an explanatory diagram showing respective induced voltage waveforms when the electromagnetic brake force is generated by a brushless motor.

FIG. 15 is a block diagram showing an electromagnetic brake control circuit.

Best Mode for Carrying Out the Invention

An embodiment of the present invention is described with reference to the drawings.

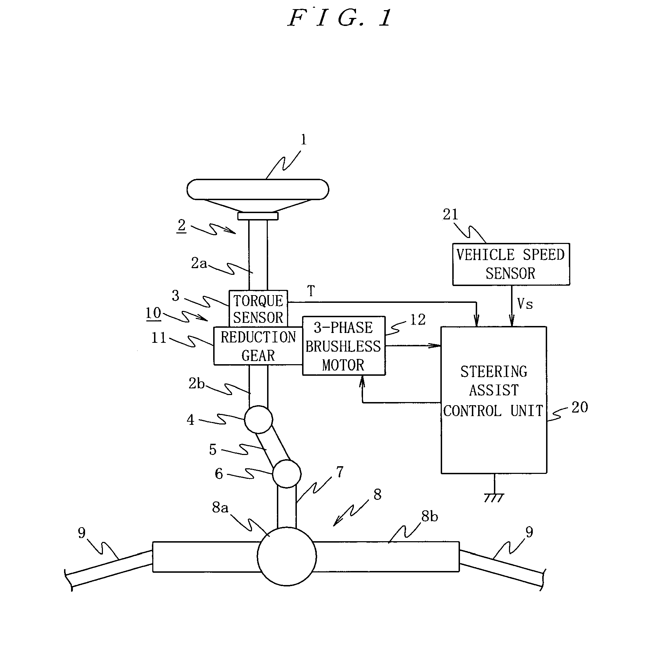

FIG. 1 is a general configuration diagram showing an embodiment of the electric power steering apparatus according to the present invention, in which 1 denotes a steering wheel, a steering force applied by the driver to the steering wheel 1 is transmitted to the steering shaft having a shaft input side 2a and a shaft output side 2b. The steering shaft 2 has one end of the shaft input side 2a connected to the steering wheel 1 and the other end of the shaft input side 2a connected to one end of the shaft output side 2b through a steering torque sensor 3 that serves as a steering torque detecting means.

The steering force transmitted to the shaft output side 2b is transmitted to a lower shaft 5 through a universal joint 4, and then transmitted to a pinion shaft 7 through a universal joint 6. The steering force transmitted to the pinion shaft 7 is further transmitted to tie-rods 9 by way of a steering gear 8, thereby turning steered wheels, not shown. The steering gear 8 is a rack-and-pinion type including a pinion 8a connected to a pinion shaft 7 and a rack 8b that meshes with the pinion 8a, and converts the rotation transmitted to the pinion 8a into a straight-moving motion by the rack 8b.

The shaft output side 2b of the steering shaft 2 is connected to a steering assist mechanism 10 that transmits a steering assist force to the shaft output side 2b. The steering assist mechanism 10 includes a reduction gear 11 connected to the shaft output side 2b, and a 3-phase brushless motor 12 to generate the steering assist force, which is connected to the reduction gear 11.

The steering torque sensor 3 detects a steering torque, which is applied from the steering wheel 1 and transmitted to the shaft input side 2a. For example, the torque sensor 3 is configured such that it detects the steering torque by converting the steering torque into a displacement twisting angular of the torsion bar, not shown, inserted between the shaft input side 2a and the shaft output side 2b, and by further converting the displacement twisting angular into changes in resistance or magnetism.

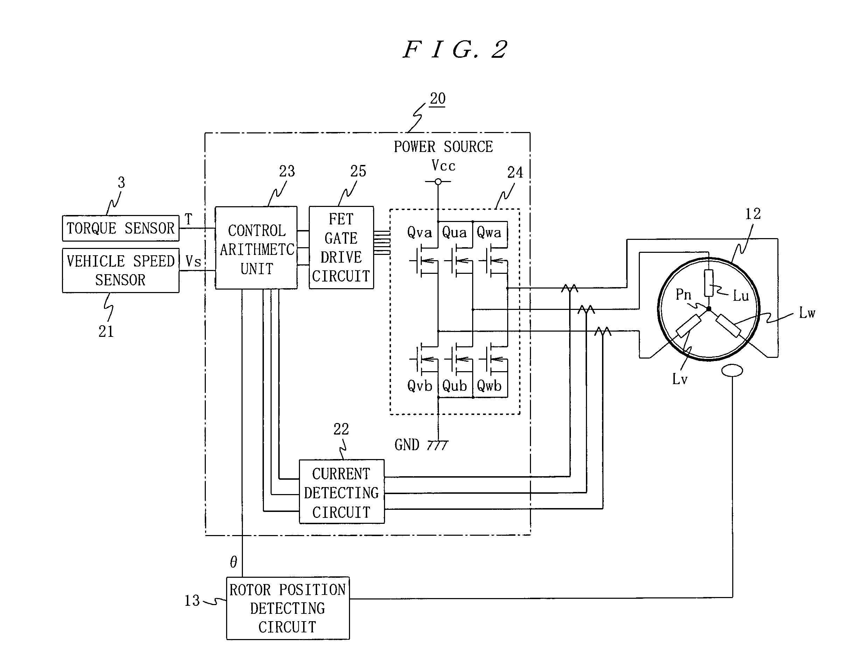

As shown in FIG. 2, the 3-phase brushless motor 12 is formed in the form of star connections, in which a U-phase coil Lu, a V-phase coil Lv, and a W-phase coil Lw are joined at one end, with the opposite ends are connected to a steering assist control unit 20 as a motor control means and separately supplying motor drive currents Iu, Iv, and Iw. The 3-phase brushless motor 12 includes a rotor position detecting circuit 13 formed by, for example, a resolver or encoder to detect the rotating position of the rotor.

As shown in FIG. 2, the steering assist control unit 20 receives as inputs a steering torque T detected by the steering torque sensor 3 and a vehicle speed detection value Vs detected by a vehicle speed sensor 21, and also receives a rotor rotating angle $\theta$ detected by the rotor position detecting circuit 13. The other inputs to the steering assist control unit 20 are motor drive current detection values Iud, Ivd, and Iwd output from the motor detecting circuit 22 that detect the motor drive currents Iu, Iv and Iw supplied to the phases Lu, Lv and Lw of the 3-phase brushless motor 12.

The steering assist control unit 20 includes a control arithmetic unit 23, formed by a micro computer for example, which calculates steering assist target current values based on a steering torque T, a vehicle speed detection value Vs, motor current detection values Iud, Ivd, and Iwd, and a rotor rotating angle $\theta$, and outputs motor voltage command values Vu, Vv, and Vw, and a motor drive circuit 24 formed by field effect transistors (FET) to drive the 3-phase brushless motor 12, and an FET gate drive circuit 25 to control the gate currents of the field effect transistors of the motor drive circuit 24 based on the phase voltage command values Vu, Vv, and Vw output from the control arithmetic unit 23.

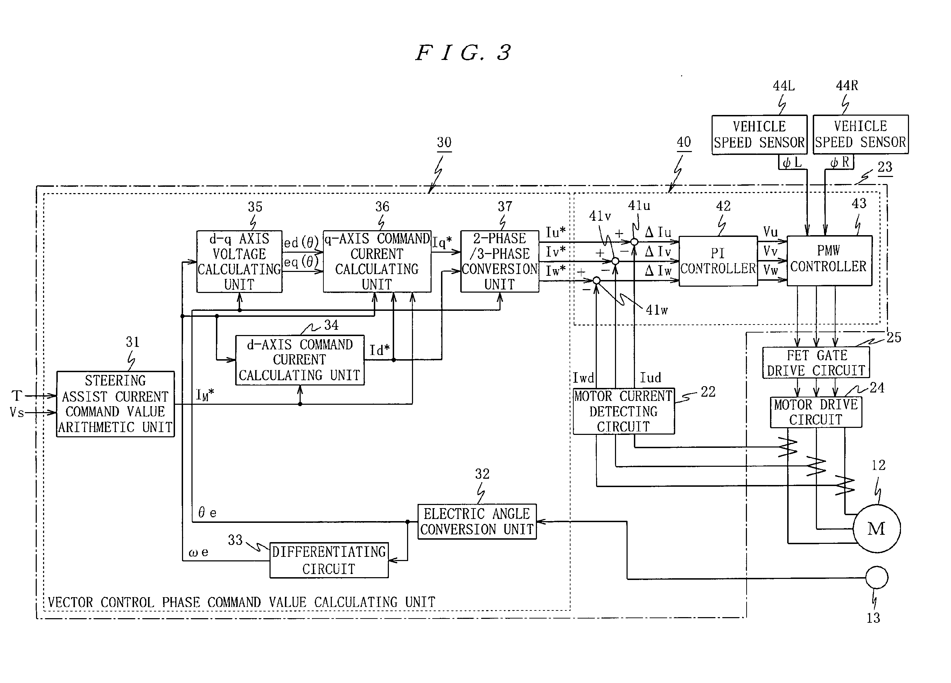

As shown in FIG. 3, the control arithmetic unit 23 includes a vector control phase command value calculating circuit 30 for first determining current command values of vector control d and q components by utilizing superior characteristics of vector control, and then converting those current command values into phase current command values Iu*, Iv*, and Iw* corresponding to exciting coils Lu, Lv, and Lw and outputting the phase current command values Iu*, Iv*, and Iw*, and also includes a current control circuit 40 for executing a current feedback process by using the phase current command values Iu*, Iv*, and Iw* output from the vector control phase command value calculating circuit 30 and motor current detection values Iud, Iuv, and Iuw detected by the motor current detecting circuit 41.

As shown in FIG. 3, the vector control phase command value calculating circuit 30 includes a steering assist current command value arithmetic unit 31 that receives a steering torque T detected by the steering torque sensor 3 and a vehicle speed Vs detected by the vehicle speed sensor 21, and calculates a steering assist current command value $I_M$* based on the steering torque T and the vehicle speed Vs, an electric angle conversion unit 32 for converting a rotor rotating angle $\theta$ detected by the rotor rotating angle detecting circuit 13 into an electric angle $\theta e$, a differentiating circuit 33 for calculating an electric angular velocity $\omega e$ by differentiating an electric angle $\theta e$ output from the electric angle conversion unit 32, a d-axis command current calculating unit 34 for calculating a d-axis command current Id* based on a steering assist current command value $I_M$* and an electric angular velocity $\omega e$, a d-q axis voltage calculating unit 35 for calculating d-axis voltage ed($\theta$) and a q-axis voltage eq ($\theta$) based on an electric angle $\theta$ e, a q-axis command current calculating unit 36 for calculating a q-axis command current Iq* based on a d-axis voltage ed($\theta$) and a q-axis voltage eq ($\theta$) output from the d-q axis voltage calculating unit 35, a d-axis command current Id* output from the d-axis command current calculating unit 34, and a steering assist current command value $I_M$* output from the steering assist current command value arithmetic unit 31, and a 2-phase/3-phase converting unit 37 for converting a d-axis command current Id* output from the d-axis command current calculating unit 34 and a q-axis command current Iq* output from the q-axis command current calculating unit 36 into 3-phase current command values Iu*, Iv*, and Iw*.

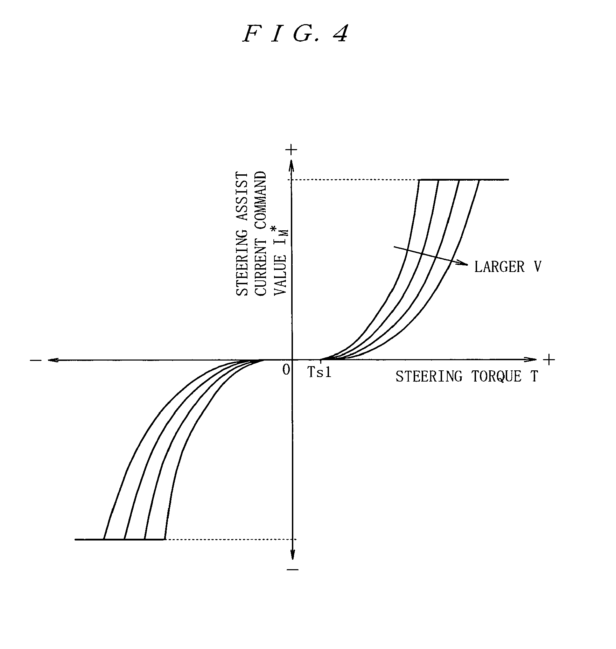

The above-described steering assist current value calculating unit 31 calculates a steering assist current command value $I_M$* based on a steering torque T and a vehicle speed Vs by referring to a steering assist current command value calculation map shown in FIG. 4. In the steering assist command value calculation map, as shown in FIG. 4, the horizontal axis is taken as steering torque T and the vertical axis is taken as steering assist command value $I_M$*, and shows a characteristic diagram represented by a parabolic curves with the vehicle speed V used as the parameter. In the region of torque T from 0 to T1 near 0, the steering assist command value $I_M$* remain at 0, and when the steering torque T exceeds T1, the steering assist command value $I_M$* increases relatively slowly with respect to the increase in the steering torque T. As the steering torque T increases, compared with the increase rate of the steering torque T, the steering assist command value $I_M$* increases sharply, but the curves of the steering assist command value show slower increase rates with higher vehicle speeds.

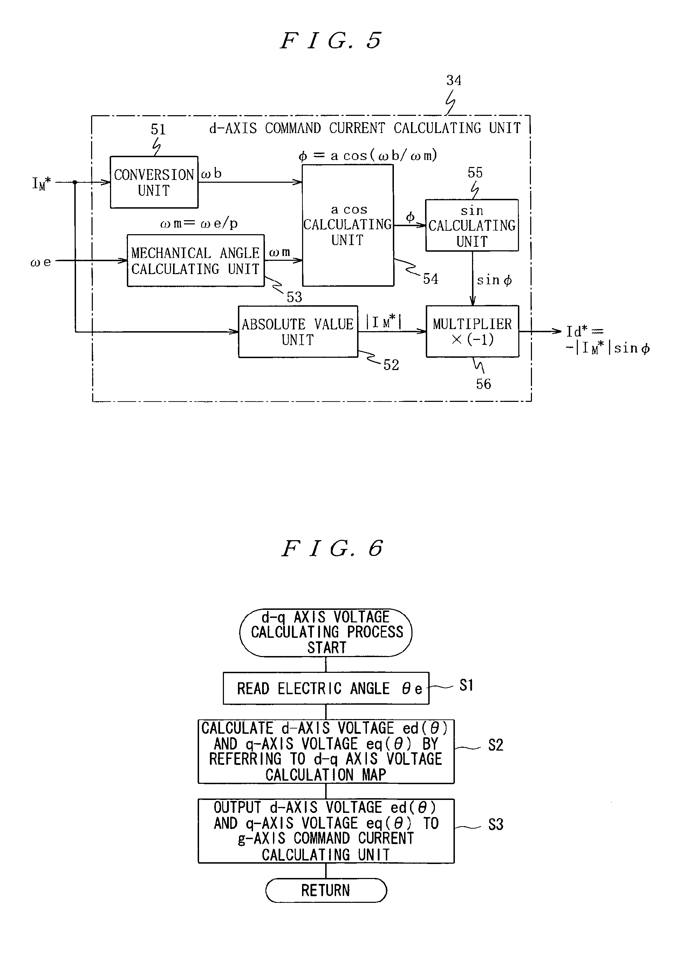

As shown in FIG. 5, the d-axis command current calculating unit 34 includes a conversion unit 51 for converting a steering assist current command value $I_M$* output from the steering assist current command value arithmetic unit 31 into a base angular velocity $\omega$ b to the 3-phase brushless motor 12, an absolute value unit 52 for calculating an absolute value $|I_M$*$|$ of a steering assist current command value $I_M$*, a mechanical angle calculating unit 53 for calculating a mechanical angle velocity $\omega$m (= $\omega$e/P) of the motor from an electric angular velocity $\omega$e and a pole number P of the motor, an acos calculating unit 54 for calculating an advance angle $\phi$ = acos ($\omega$b/$\omega$m) based on a base angular velocity $\omega$b and a mechanical angular velocity $\omega$m, a sin calculating unit 55 for obtaining sin $\phi$ based on an advance angle $\phi$, and a multiplier 56 for calculating a d-axis current command value Id* (= - $|I_M$*$|$ sin $\phi$) by multiplying -1 times a result of multiplying an absolute value $|I_M$*$|$ from the absolute value unit 52 and sin $\phi$ output from the sin calculating unit 55.

By configuring the d-axis command current calculating unit 34 as described, a d-axis command current Id* is obtained as follows.

$$Id^* = - |I_M^*| \cdot \sin (\mathrm{acos}( \omega b/ \omega m) \ldots\ldots\ldots (1)$$

With regard to a term of acos ($\omega$b/ $\omega$m) in Eq. (1), when the rotating velocity of the motor is not high, in other words, when the mechanical angular velocity $\omega$m of the 3-phase brushless motor 12 is slower than the base angular velocity $\omega$b, since $\omega$m < $\omega$b, acos ($\omega$b/ $\omega$m) = 0, and therefore Id*= 0.

However, when the motor rotates at a high rotating velocity, in other words, when the mechanical angular velocity $\omega$m is faster than the base angular velocity $\omega$b, a value of the current command value Id* is generated, and field-weakening control begins. As shown in Eq. (1), since the current command value Id* changes with the rotating velocity of the 3-phase brushless motor 12, a beneficial effect is that control in high rotating velocity can be performed smoothly in a seamless manner.

Another effect can be obtained regarding the problem of motor terminal voltage saturation. A phase voltage V of the motor is generally expressed as

$$V = E + R I + L(di/dt) \ldots\ldots\ldots\ldots (2)$$

where E is a counter-electromotive voltage, R is a fixed resistance, and L is an inductance. Since the counter-electromotive voltage E becomes large as the motor rotates at a higher speed while a power source voltage such as battery voltage is fixed. Thus, a range of voltage that can be used for control of the motor is narrowed. An angular velocity at which a voltage saturation is reached is a base angular velocity $\omega$b. When the voltage saturation occurs, a duty ratio of PWM control reaches 100%, and after this, a motor current cannot follow a current command value any more, with the result that torque ripple will increase.

However, the current command value Id* in Eq. (1) has a negative polarity, and an induced voltage component of the current command value Id* with respect to L(di/dt) of Eq. (2) has a polarity opposite to that of the counter-electromotive voltage E. Therefore, there is an effect that the counter-electromotive voltage E, which increases as the motor rotates at higher speed, is reduced by a voltage induced by the current command value Id*. As a result, even if the 3-phase brushless motor 12 rotates at high speed, the range of voltage, which can control, is increased by the effect of the current command value Id*. In other words, there is an effect that a control voltage for the motor is not saturated by the field-weakening control according to the control for the current command value Id*, the range of voltage, which can control the motor, increased, and torque ripple is prevented from increasing even when the motor rotates at high speed.

The d-q axis voltage calculating unit 35 executes a d-q axis voltage calculating process shown in FIG. 6, for example, and calculates a d-axis voltage ed(θ) and a q-axis voltage eq(θ).

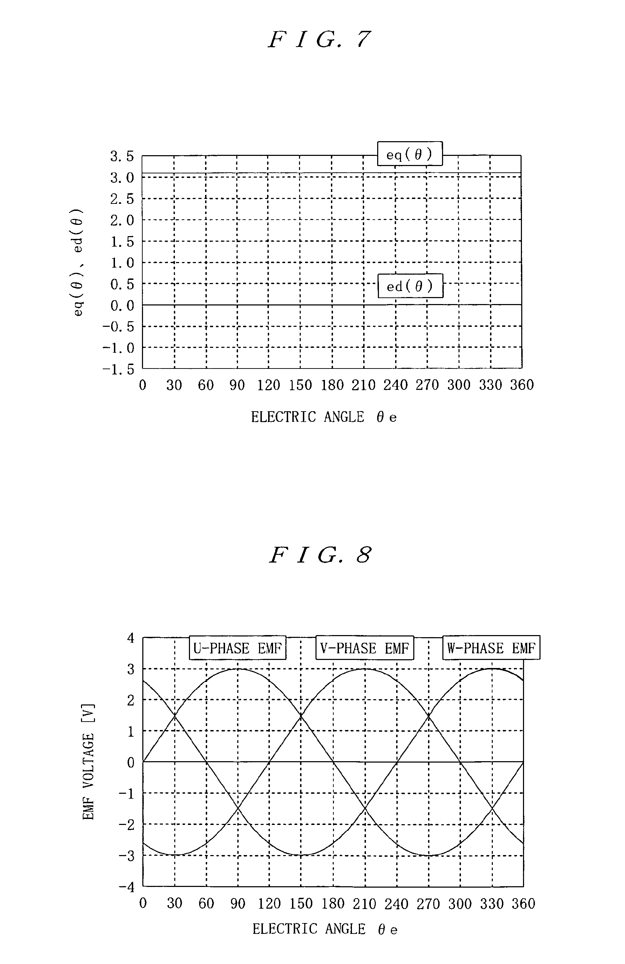

This d-q axis voltage calculating process reads an electric angle θe in step S1, proceeds to step S2, and calculates a d-axis voltage end(θ) and a q-axis voltage eq(θ) based on an electric angle θe by referring to a d-q axis voltage calculation map shown in FIG. 7, then moves on to step S3, and outputs a calculated d-axis voltage ed (θ) and a q-axis voltage eq (θ) > to the q-axis command current calculating unit 36, and returns to step S1. In the d-q axis voltage calculation map, as shown in FIG. 7, the horizontal axis is taken as electric angle θe, and the vertical axis is taken as d-axis voltage end (θ) and q-axis voltage eq(θ) on the rotating coordinates, which are obtained by conversion of the induced voltage waveforms generated on the respective phase coils. If the 3-phase brushless motor 12 is a sine-wave induced voltage motor generating sine-waves 120 degrees out of phase with each other, such as induced voltage waveforms U-phase EMF, V-phase EMF, and W-phase EMF in normal state as shown in FIG. 8, then a d-axis voltage ed(θ) and a q-axis voltage eq(θ) are maintained at constant values regardless of electric angle θe as shown in FIG. 7.

Further, the q-axis command current value calculating unit 36 carries out an arithmetic operation in Eq.(3) based on an electric angle velocity ωe, a d-axis voltage ed(θ), a q-axis voltage eq(θ), a d-axis command current Id*, and a steering assist current command value $I_M$* to obtain a q-axis command current Iq*.

$$Iq^* = (Kt \times I_M^* \times \omega e - ed(\theta) \times Id^*) \div eq(\theta) \quad \ldots\ldots\ldots (3)$$

where Kt is a motor torque constant.

The current control circuit 40 includes subtracters 41u, 41v, and 41w obtains phase current deviations ΔIu, ΔIv, and ΔIw by subtracting motor phase current detection values Iud, Ivd, and Iwd flowing in the phase coils Lu, Lv, and Lw, detected by the current detecting circuit 22, from current command values Iu* , Iv* , and Iw* supplied from the vector control phase command value calculating circuit 30, a PI controller 42 for calculating command voltages Vu, Vv, and Vw by performing proportional-plus-integral control on the obtained phase current deviations ΔIu, ΔIv, and ΔIw, and a PWM controller 43 for forming pulse width modulated (PWM) signals PWMua to PWMwb corresponding to the field effect transistors Qua to Qwb of the motor drive circuit 24, which will be described later, based on the calculated command voltages Vu, Vv, and Vw.

Pulse width modulated signals PWMua to PWMwb output from the PWM controller 43 are supplied to the FET gate drive circuit 25.

The PWM controller 43 receives detection values from the wheel speed sensors 44L and 44R to detect wheel speeds φL and φR of the left and right driven wheels of the vehicle, and monitors the battery voltage to detect whether or not the motor stopping conditions are established, and executes a PWM signal forming process that outputs pulse width modulated signals PWMua to PWMwb based on input command voltages Vu, Vv, and Vw when a the motor stopping conditions are not established, that is, the battery voltage is normal, or outputs pulse width modulated signals PWMua to PWMwb to execute electromagnetic brake control when the motor stopping conditions are established.

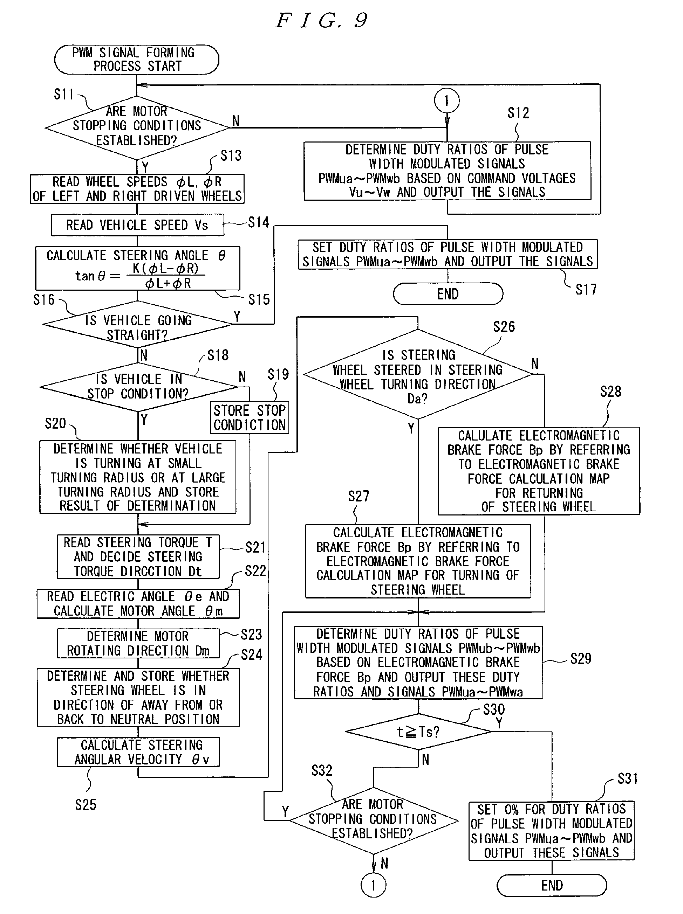

As shown in FIG. 9, the PWM signal forming process, in step S11, decides whether or not the motor stopping conditions are established. This decision determines whether or not the condition to stop the motor has took place, such as a rise or fall of the battery voltage by monitoring the battery voltage, for example.

When it is found by a decision result in step S11 that the motor stopping conditions are not established, that is, the battery voltage is normal, the process proceeds to step S12, forms pulse width modulated signals PWMua to PWMwb based on input command voltages Vu to Vw and outputs those signals to the FET gate drive circuit 25, and then returns to step S11 and when the decision in step S13 shows that the motor stopping conditions are established, the process goes on to step S13.

In step S13, the PWM signal forming process reads the wheel speeds φL and φR of the left and right driven wheels, moves on to step S14, reads the vehicle speed Vs detected by the vehicle speed sensor 21, and then moves on to step S15, and calculates the steering angle θ by using Eq. (4) shown below based on the wheel speeds φL and φR.

$$\tan\theta = K(\phi L - \phi R)/(\phi L + \phi R) \quad \ldots\ldots\ldots\ldots (4)$$

where K is a coefficient.

Then, the process moves on to step S16, determines whether or not the absolute value of the steering angle θ is equal to or less than a predetermined value θs that indicates the straight-ahead running condition, and if it is decided that |θ| ≦ θs, which means that the vehicle is in the straight-ahead running condition, the process proceeds to step S17, sets the pulse width modulated signals PWMua to PWMwb all to off, namely, to a duty ratio of "0" %, and the process is finished, or if |θ| > θs, which means that the vehicle is not in the straight-ahead running condition, the process goes on to step S18.

In sep S18, it is decided whether or not the vehicle is in stop condition, more specifically, whether or not the vehicle speed Vs is equal to or less than a predetermined value Vss near zero, and if a decision result shows that Vs ≦ Vss, the process proceeds to step S19, stores the stop condition in a running condition storage area formed in a RAM for example, and moves to step S21 or if the decision result is Vs > Vss, the process moves to step S20.

In step S20, according to whether or not the steering angle θ is equal to or less than a threshold value θt, which is used to determine whether the vehicle is turning at a small turning radius or turning at a large turning radius, it is determined whether the vehicle is turning at a small turning radius or a large turning radius, and the process stores this decision result in the above-described running condition storage area, and proceeds to next step S21, reads a steering torque T, and determines a steering torque direction Dt according to whether the steering torque T is higher or lower than a neutral value representing torque "0", stores this decision result into a steering torque direction storage area formed by a RAM, for example, and moves on to step S22.

In step S22, the pulse width modulated signal forming process reads an electric angle θe from the electric angle conversion unit 32, obtains a motor angle θm(n) (= θe/p) by dividing an electric angle θe by a motor pole-pair number p, and differentiates this motor angle θm(n) to obtain a motor angular velocity ωm, stores this motor angular velocity ωm in a motor angular velocity storage area formed in a RAM for example, then moves on to step S23, compares a current motor angle θm(n) with the previously calculated motor angle θm(n-1) to thereby determine a motor rotating direction Dm(n), stores this motor rotating direction in a motor rotating direction storage area formed in a RAM for example, and proceeds to step S24.

In step S24, according to whether or not the steering torque direction Dt stored in the steering torque direction storage area coincides with the direction of the motor angular velocity ωm stored in the motor angular velocity storage area, the pulse width modulated signal forming process determines whether the steering wheel is being steered a steering wheel turning direction Da which is steered away from the neutral position or a steering wheel returning direction Dr which is steered back to the neutral position, and stores this result of determination in a steering direction storage area formed in a RAM, for example, and proceeds to step S25.

In this step S25, the process calculates a steering angular velocity θv by differentiating a steering angle θ, stores the steering angular velocity θv in a steering angular velocity storage area formed in a RAM for example, then proceeds to step S26.

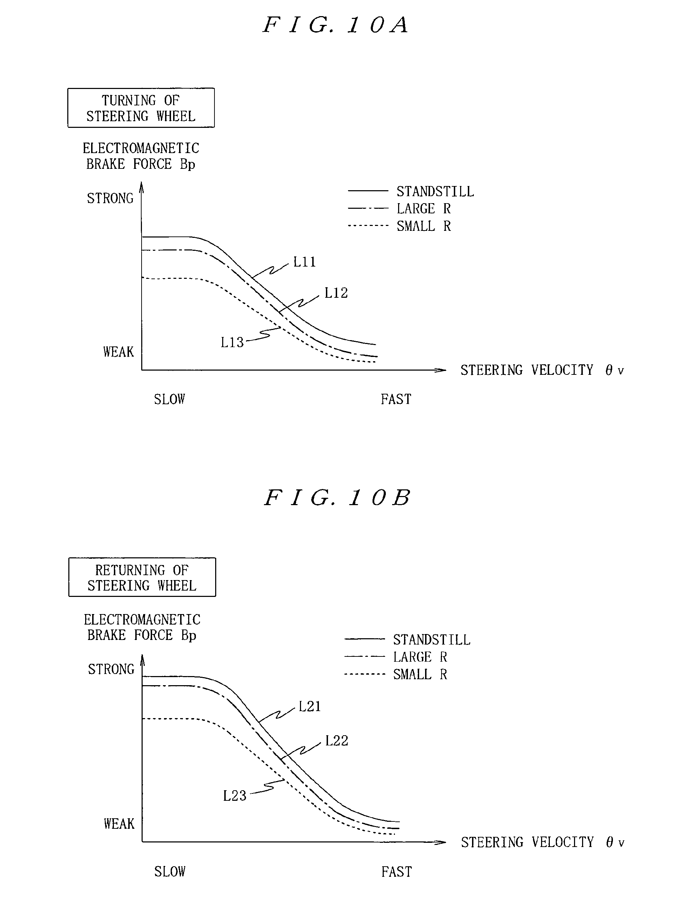

In step S26, it is decided whether the steering direction is in the steering wheel turning direction Da or in the steering wheel returning direction Dr stored in the steering direction storage area, and if a decision result shows that the steering wheel is steered in the steering wheel turning direction Da, the process moves on to step S27, calculates an electromagnetic brake force Bp based on any one of the stop condition, the small-radius turning condition, and the large-radius turning condition by referring to the electromagnetic brake calculation control map for turning of a steering wheel shown in FIG. 10A, and the process goes to step S29. In the electromagnetic brake calculation control map for returning of a steering wheel, as shown in FIG. 10A, the horizontal axis is taken as the steering velocity θv, and the vertical axis is taken as the electromagnetic brake force Bp, and characteristic curves L11, L12, and L13 are set by using the stop condition, the small radius turning condition, and the large radius turning condition as parameters, and the levels of calculated electromagnetic force Bp are lower in a descending order of the curves L11, L12, and L13, and in each of those curves, the electromagnetic brake force Bp becomes smaller as the steering velocity θv becomes faster.

On the other hand, if a decision result in step S26 shows that the steering wheel is steered in the steering wheel returning direction Dr, the process proceeds to step S28, and calculates an electromagnetic brake force Bp based on any one of the stop condition, the small-radius turning condition, and the large-radius turning condition by referring to an electromagnetic brake calculation control map for returning of a steering wheel shown in FIG. 10B, and then return to step S29. In the electromagnetic brake force calculation map for returning of a steering wheel, as shown in FIG. 10B, as with the electromagnetic brake calculation map for turning of a steering wheel described above, the horizontal axis is taken as steering velocity θv, and the vertical axis is taken as electromagnetic brake force Bp, and characteristic curves L11, L12, and L13 are set by using the stop condition, the small radius turning condition, and the large radius turning condition as parameters, and the levels of calculated electromagnetic force are lower in a descending order of the curves L21, L22, and L23, and in each of those curves, the electromagnetic brake force Bp becomes smaller as the steering velocity θv becomes faster. And, the electromagnetic brake calculation control map for returning of a steering wheel makes it possible to obtain larger values of electromagnetic brake force Bp for the whole range of the curves than in the characteristic curves L11, L12, and L13 in the electromagnetic brake calculation control map for turning of a steering wheel.

In step S29, on the basis of a calculated electromagnetic brake force Bp, the process decides a duty ratio of pulse width modulated signals PWMub, PWMvb, and PWMwb supplied to low-side transistors Qub, Qvb, and Qwb of the inverter that forms the motor drive circuit 24, and outputs decided duty ratios of the pulse width modulated signals PWMub, PWMvb, and PWMwb and pulse width modulated signals PWMua, PWMva, and PWMwa with a duty ratio of "0"% to the FET gate drive circuit 25, and then proceeds to step S30.

In step S30, the process decides whether or not elapsed time t since step S13 started has passed a predetermined time Ts, and if $t \geqq Ts$, decides that a predetermined time has passed, and moves to step S31, sets "0"% for all duty ratios of the pulse width modulated signals PWMua to PWMwb, and closes the process, or if $t < Ts$, the process proceeds to step S32, just as in the above-described step S11, decides whether or not the motor stopping conditions are established, and if the motor stopping conditions are established, returns to step S29, and if the motor stopping conditions are not established, moves to step S12.

In the process in FIG. 9, the process in step S11 corresponds to the motor stop condition detecting means and the processes in steps S13 to S32 correspond to the electromagnetic brake control means, in which the processes in step S16 and step S20 correspond to the running condition detecting means, the process in step S24 corresponds to the steering condition detecting means, and the process in step S25 corresponds to the steering velocity detecting means. The motor drive circuit 24, as shown in FIG. 2, has an inverter configured by having connected in parallel the switching elements Qua, Qub, Qva, Qvb, Qwa, Qwb respectively formed by N-channel MOSFETs connected in series with the respective corresponding phase coils Lu, Lv, and Lw, and a connection point between the switching elements Qua, Qub, a connection point between the switching elements Qva, Qvb, and a connection point between Qwa, Qwb are respectively connected to sides of the phase coils Lu, Lv, and Lw opposite to the neutral point.

And, the pulse width modulated signals PWMua, PWMub, PWMva, PWMvb, PWMwa, PWMwb output by the FET gate drive circuit 25 are supplied to the switching elements Qua, Qub, Qva, Qvb, Qwa, Qwb, as the component parts of the motor drive circuit 24.

The operation of the first embodiment will be described in the following.

In such a time when the battery voltage is within a normal range, since the motor stopping conditions are not established, the process proceeds to step S12, where the duty ratios of the pulse width modulated signals PWMua to PWMwb are determined based on command voltages Vu to Vw and output to the FET gate drive circuit 25, and as a result, motor drive currents Iu, Iv, and Iw output from the motor drive circuit 24 are supplied to the phase coils Lu, Lv, and Lw of the 3-phase brushless motor 12.

Under this condition, when the steering wheel 1 is not being steered while the vehicle is at a standstill, for example, since the steering torque T detected by the steering torque sensor 3 is "0", the steering assist current command value $I_M^*$ calculated in the steering assist current command value arithmetic unit 31 of the control arithmetic unit 23 is "0" and the electric angular velocity $\omega$e output by the differentiating circuit 33 is also "0". Therefore, the d-axis command current Id* calculated by the d-axis command current calculating unit 34 is "0" and the q-axis command current Iq* calculated using the above Eq. (3) by the q-axis command current calculating unit 36 is "0", and as a result, the phase current command values Iu*, Iv*, and Iw* output by the 2-phase/3-phase conversion unit 37 are also "0".

Since at this time the 3-phase brushless motor 12 is at standstill, the motor current detection values Iud, Ivd, and Iwd detected by the motor current detecting circuit 22 are "0", too. Therefore, the current deviations ΔIu, ΔIv, and ΔIw output by the subtracters 41u, 41v, and 41w of the current control circuit 40 are "0", the voltage command values Vu, Vv, and Vw output by the PI control unit 42 are also "0", the duty ratios of the pulse width modulated signals output from the FET gate drive circuit 26 to the gates of the field effect transistors Qua, Qub, Qva, Qvb, Qwa, Qwb of the motor drive circuit 24 are also controlled to 0%, the motor currents Iu, Iv, and Iw supplied to the phase coils Lu, Lv, and Lw of the 3-phase brushless motor are "0", so that the 3-phase brushless motor 12 is maintained in a stationary condition.

When the steering wheel 1 is steered from the non-steering condition into a so-called stationary steering state while the vehicle is at standstill, in response to this, the steering torque T detected by the steering torque sensor 3 becomes a large value, and since the vehicle speed Vs is "0", a steepest characteristic curve is selected from the steering assist current command value calculation map in FIG. 4, and therefore, owing to an increase in the steering torque T, a large value is calculated for the steering assist current command value $I_M^*$. Consequently, the d-axis command current Id* calculated by the d-axis command current calculating unit 34 increases in a negative direction.

In the voltage calculating process in FIG. 6, the d-q axis voltage calculating unit 35 calculates a d-axis voltage ed (θ) and a q-axis voltage eq (θ) by referring to the d-q axis voltage calculation map shown in FIG. 7.

At this time, since the 3-phase brushless motor 12 is at a standstill, the electric angular velocity ωe stays in "0" state, but in the d-q axis voltage calculation map in FIG. 7, the de-axis voltage ed(θ) is maintained at "0" and the q-axis voltage eq(θ) at 3.0, for example, regardless of an electric angular velocity θe, and these voltages are supplied to the q-axis command current calculating unit 36, so that a q-axis command current Iq* is calculated in the q-axis command current calculating unit 36 using Eq.(3).

Calculated d-axis command current Id* and q-axis command current Iq* are subjected to a 3-phase-splitting process in the 2-phase/3-phase conversion unit 37 to obtain current command values Iu*, Iv*, and Iw*, which are supplied to the current control unit 40.

Therefore, in the current control circuit 40, since the motor current detection values Iud, Ivd, and Iwd input by the motor current detecting circuit 22 are maintained at "0", the current deviations $\Delta$Iu, $\Delta$Iv, and $\Delta$Iw output by the substracters 41u, 41v, and 41w increase in a positive direction, and the PI control unit 42 performs PI control process over the current deviations $\Delta$Iu, $\Delta$Iv, and $\Delta$Iw to obtain command voltages Vu, Vv, and Vw, and by supplying the command voltages Vu, Vv, Vw to the PWM control unit 43, the duty ratios of the pulse width modulated signals PWMua to PWMwb are decided, and by supplying the pulse width modulated signals PWMua to PWMwb of the decided duty ratios to the FET gate drive circuit 25, the field effect transistors of the motor drive circuit 24 are controlled, and by outputting the motor phase currents Iu, Iv, and Iw which have 120 degrees out of phase with each other as shown in FIG. 8 from the motor drive circuit 24 to the phase coils Lu, Lv, and Lw of the 3-phase brushless motor 12, the 3-phase brushless motor 12 is rotatingly driven to generate a steering assist force according to a steering torque applied to the steering wheel 1, and by transmitting the steering assist force through the reduction gear 11 to the steering shaft 2, it becomes possible for the driver to turn the steering wheel 1 with a light steering force.

After this, when the vehicle starts to run, in response to which, the steering assist current command value $I_M$* calculated by the steering assist current command value arithmetic unit 31 goes down, and as a result, the d-axis command current Id* and the q-axis command current Iq* decrease, the motor current command values Iu*, Iv*, and Iw* output from the 2-phase/3-phase conversion unit 37 decrease, in response to which the motor drive currents Iu, Iv, and Iw drop, and the steering assist force generated by the 3-phase brushless motor 12 decreases.

When, for example, the battery voltage rises or falls from the non-established condition in the motor stop decision and it is decided that the motor stopping conditions are established, then in the PWM signal forming process in FIG. 9, the process proceeds from step S11 to step S12, and based on the wheel speeds $\phi$L and $\phi$R of the left and right driven wheels, the steering angle $\theta$ is calculated by using Eq.(4).

At this time, when the vehicle is going straight ahead, the steering angle $\theta$ is almost zero, the absolute value $|\theta|$ of the steering angle $\theta$ becomes equal to or smaller than a predetermined value $\theta$s, the process moves from step S16 to step S17 where the duty ratios of the pulse width modulated signals PWMua to PWMw are set at "0"%, and those pulse width modulated signals are output to the FET gate drive circuit 25, and as those pulse width modulated signals are output to the FET gate drive circuit 25, the motor currents Iu to Iw output from the motor drive circuit 24 are reduced to "0" to immediately stop the 3-phase brushless motor 12.

When the vehicle is going straight ahead, since the a steering torque T detected by the steering torque sensor 3 is substantially "0" and the steering assist current command value $I_M$* is "0", also because the motor currents Iu to Iw have been substantially "0", torsion is not occurring in the tires and a kick-back does not occur, so that the 3-phase brushless motor 12 is stopped right away.

However, when the vehicle is at standstill or turning, the steering torque T detected by the steering torque sensor 3 is relatively large and the steering assist current command value $I_M$* is also relatively large, and therefore the motor currents Iu to Iw output from the motor drive circuit 24 is relatively large, so that the 3-phase brushless motor 12 generates a relatively large steering assist force, and this steering assist force is transmitted through the reduction gear 11 to the steering shaft 2, and therefore the tires are in twisted state.

Therefore, if the 3-phase brushless motor 12 is stopped immediately, the torsion force to the tires is released, giving rise to a so-called kick-back phenomenon as a turning force in the opposite direction when the steering wheel 1 is steered in the direction away from the neutral position, or as a turning force in the same direction when the steering wheel 1 is steered back to the neutral position.

When the vehicle has been at standstill, if the steering wheel 1 steered from the standstill condition, since the steering torque is large, the extent of the kick-back tends to be large.

Therefore, in the pulse width modulated signal forming process in FIG. 9, when the vehicle is at standstill, the process proceeds from step S18 to step S19 where a stop condition is stored in the running condition storage area formed in a RAM, for example, and according whether or not the steering torque direction Dt coincides with the motor angular velocity $\omega$m, it is determined whether the steering wheel is steered in the steering wheel turning direction Da or in the steering wheel returning direction Dr, and this decision result is stored in the steering direction storage area.

If the steering wheel is steered in the steering wheel turning direction Da, the process moves from step S26 to step S27 where an electromagnetic brake force Bp is calculated by referring to the electromagnetic brake force calculation map for turning of a steering wheel shown in FIG. 10A based on a steering velocity $\theta$v.

At this time, if the steering velocity $\theta$v is slow, the electromagnetic brake force Bp is at a large value, but as the steering velocity $\theta$bv becomes faster, the electromagnetic brake force Bp becomes a smaller value.

Since the duty ratios of the low-side transistors Qub, Qvb, and Qwb of the motor drive circuit 24 are determined according to a calculated electromagnetic brake force Bp, when the steering velocity $\theta$v is slow, the duty ratios of the pulse width modulated signals PWMub, PWMvb, and PWMwb become close to 100%, and when the steering velocity $\theta$v is fast, the duty ratios become close to 0%. On the other hand, the duty ratios of the pulse width modulated signals PWMua, PWMva, and PWMwa for the high-side transistors Qua, Quv, and Qwa are set at 0%.

As thus described, in the region where the steering velocity θv is slow, since a large electromagnetic brake force Bp is generated, a rotating force caused by a kick-back is prevented from occurring, thus improving the driver's steering feeling. On the other hand, in the region where the steering velocity θv is fast, since a small electromagnetic brake force Bp is generated, thus preventing the driver from feeling resistance to his steering during a rapid turning, and producing an improved steering feeling.

When the steering direction of the steering wheel 1 is in the steering wheel returning direction Dr for running straight ahead, the process proceeds from step S26 to step S8, and an electromagnetic brake force Bp is calculated based on the steering velocity θv by referring to the electromagnetic brake force calculation map for returning of a steering wheel shown in FIG. 10B, and therefore a calculated electromagnetic brake force Bp becomes a larger value than in an electromagnetic brake force Bp in turning of a steering wheel described above, so that the steering wheel 1 can be gently steered back to the neutral position.

When the vehicle is in a small radius turning condition, in other words, when the vehicle is turning round a relatively sharp corner with a small curvature, a steering torque T detected by the steering torque sensor 3 is equal to or smaller than a steering torque when the vehicle is at standstill. Therefore, an electromagnetic brake force Bp calculated based on a steering velocity θv by referring to the electromagnetic brake force calculation maps in FIGS. 10A and 10B is equal to or smaller than a steering torque T both in steering in the steering wheel turning direction Da and steering in the steering wheel returning direction Dr than when the vehicle is at standstill, so that an optimum electromagnetic brake force Bp is generated that prevents a kick-back from occurring when the vehicle is turning with a small turning radius.

When the vehicle is in a large radius turning condition, in other words, when the vehicle is turning round a relatively gentle corner with a large curvature, a steering torque T detected by the steering torque sensor 3 is smaller than a steering torque when the vehicle is turning round a small radius corner. Therefore, an electromagnetic brake force Bp calculated based on a steering velocity θv by referring to the electromagnetic brake force calculation maps in FIGS. 10A and 10B is smaller than a steering torque T both in steering in the steering wheel turning direction Da and steering in the steering wheel returning direction Dr than in turning at a small turning radius, so that an optimum electromagnetic brake force Bp is generated that prevents a kick-back that occurs when the vehicle is turning with a large turning radius.

When an elapsed time t of the electromagnetic brake control condition becomes equal to or longer than a predetermined time Ts, the process proceeds from step S30 to step S31, as the duty ratios of all pulse width modulated signals PWMua to PWMwb are set to "0"% and output to the FET gate drive circuit 25, the 3-phase brushless motor 12 is stopped to enable manual steering. When electromagnetic brake control is active and the motor stopping conditions are not established, that is, a normal condition is restored, the process proceeds from step S32 to step S12 where the duty ratios of the pulse width modulated signals PWMua to PWMwb are determined based on command voltages Vu to Vw, and the condition in which those modulated signals may be output to the FET drive circuit 25 is restored.

As described, according to the present embodiment, it is possible to optimally control the electromagnetic brake force Bp generated according to the running condition of the vehicle, that is, a straight ahead running, stop condition, large radius turning condition, or small radius turning condition, to thereby prevent a kick-back, and obtain an excellent steering feeling.

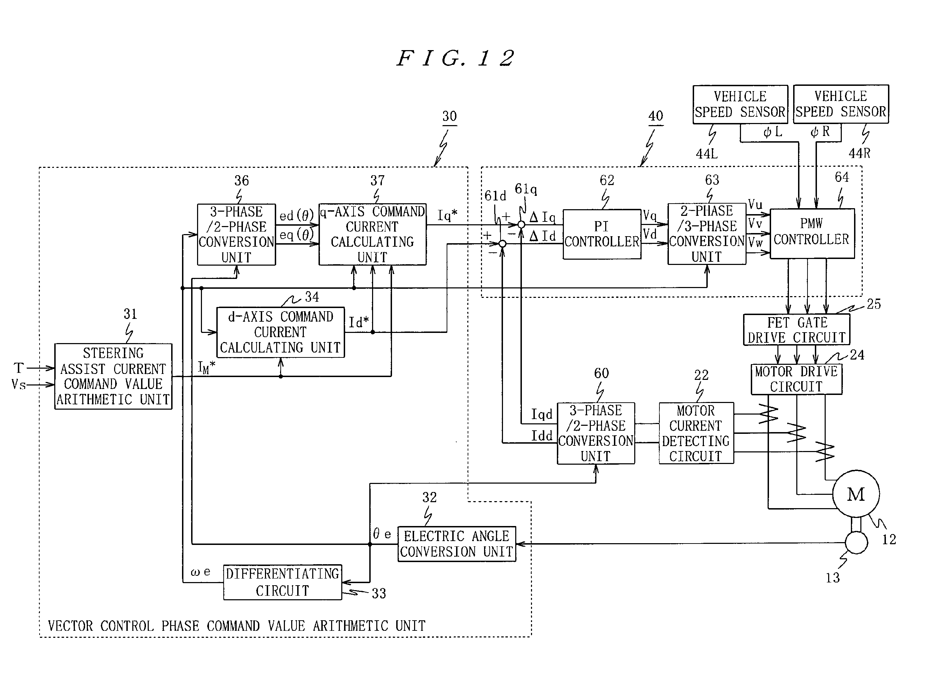

Meanwhile, in the first embodiment, description has been made of a case where a d-axis current command value id' after compensation and a q-axis current command value 1q' after compensation are converted by the 2-phase/3-phase conversion unit 37 into 3-phase target currents Iu*, Iv*, and Iw*, and those 3-phase target currents are supplied to the current control circuit 40, but the present invention is not limited to this case, as shown FIG. 12, it is also possible to do away with the 2-phase/3-phase conversion unit 37, supply motor currents Idu, Idv, and Idw detected by the current detecting circuit 22 to a 3-phase/2-phase conversion unit 60 which converts the motor currents into a d-axis detection current and a q-axis detection current, and after subtracters 61d and 61q calculate deviations between the d-axis detection current and the q-axis detection current, and a d-axis current command value id and a q-axis current command iq calculated by the vector control phase command value calculating circuit 30, calculated deviations are subjected to proportional-plus-integral control by a PI controller 62, and the deviations undergo 2-phase/3-phase conversion by the 2-phase/3-phase conversion unit 63 to obtain phase control voltages, which are supplied to a PWM controller 64.

Further, in the above embodiment, a case where a 3-phase brushless motor 12 was used as the electric motor has been described, but the present invention is not limited to this case, and a 4- or more multi-phase brushless motor can be applied.

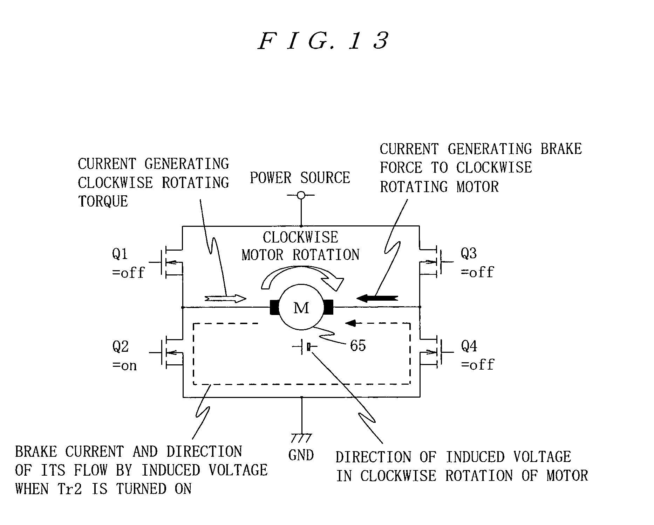

Further, in the above embodiment, a case where a 3-phase brushless motor 12 was applied as the electric motor has been described, but the present invention is not limited to this case, and a brush-type DC motor can be applied. In this example, as shown in FIG. 13, the motor drive circuit 24 is formed in an H-bridge structure in which two series circuits of field effect transistors Q1, Q3 or Q2, Q4 are connected in parallel and a brush-type DC motor 65 is connected between a connection point between the transistors Q1 and Q2 and a connection point between the transistors Q3 and Q4. When electromagnetic brake control is active, with the transistors Q1 and Q2 on the high side turned off, by driving the transistors Q2 and Q4 on the low side by pulse width modulated signals PWM2 and PWM4 of duty ratios according to an electromagnetic brake force Bp calculated based on a steering velocity θv by referring to the electromagnetic brake force calculation map in FIGS. 10A and 10B, to thereby supplying a brake current by an induced voltage, electromagnetic brake control can be performed.

Further, in the above embodiment, description has been made of a case where a steering angle θ is calculated by using Eq. (4) based on wheel speeds φL and φR of the left and right driven wheels, but the present invention is not limited to this case, and it may be arranged such that the steering angle of the steering wheel 1 is detected by the steering angle sensor.

Further, in the above embodiment, description has been made of a case where the steering velocity θv is calculated by differentiating a steering angle θ, but the present invention is not limited to this example. It may be arranged such that the steering velocity θv is calculated from a detection value by the motor position detecting unit 13 or from an estimated counter-electromotive voltage value obtained based on motor phase currents and voltages.

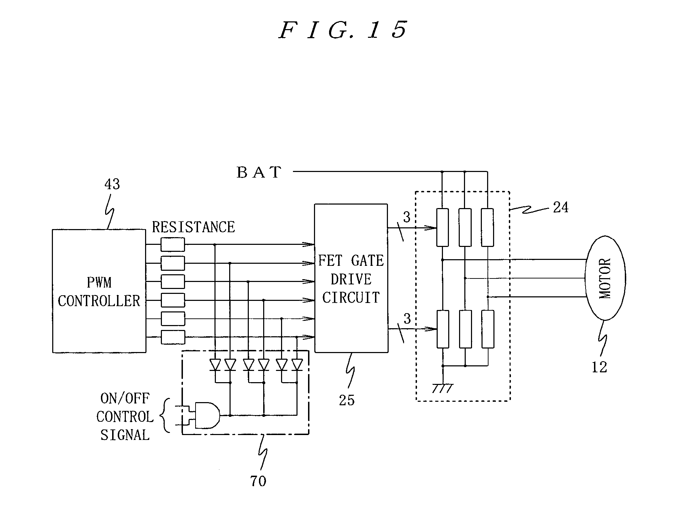

In the above embodiment, description has been made of a case where the duty ratios of the pulse width modulated signals PWMub to PWMwb are varied according to the electromagnetic brake force Bp, but the present invention is not limited to this example, more specifically, an adjusting circuit 70 may be provided as shown in FIG. 15, under the condition that the duty ratios output from the PWM controller 43 are fixed to predetermined values, the adjusting circuit 70 is used to adjust output time lengths of the pulse width modulated signals PWMub to PWMwb by ON/OFF control signals to thereby adjust the electromagnetic brake force Bp.

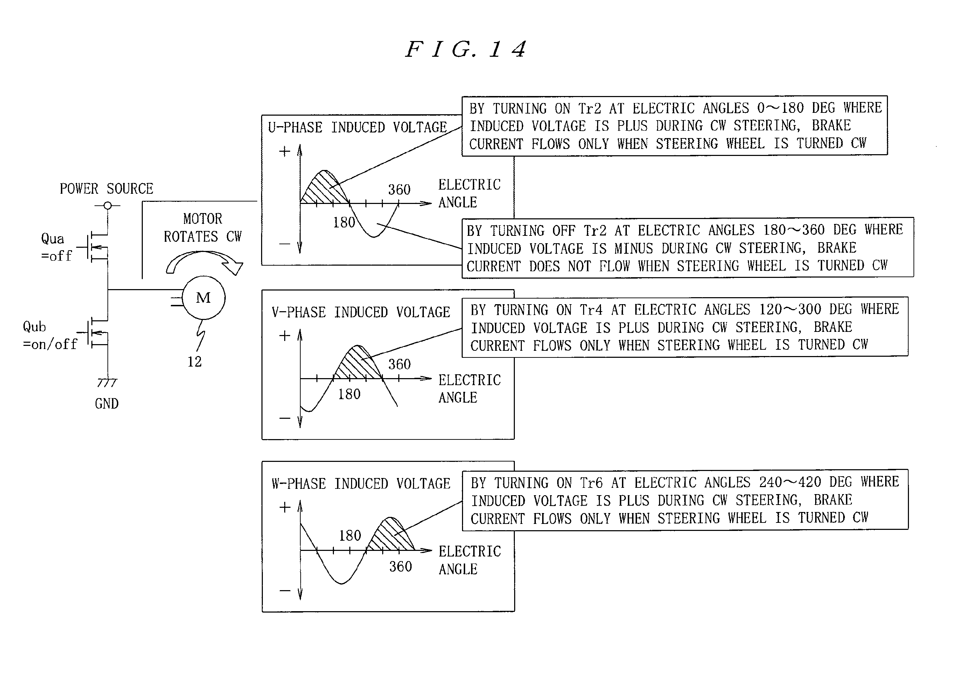

Further, in an example of electromagnetic brake control according to the above embodiment, for example, when the 3-phase brushless motor 12 rotates clockwise, as shown in FIG. 14, with regard to the U-phase, a pulse width modulated signal PWMub of a duty ratio calculated only in a range of electric angles from 0 to 180 degrees where the U-phase induced voltage is positive is supplied to the field effect transistor Qub, and with regard to the V-phase, a pulse width modulated signal PWMvb of a duty ratio calculated only in a range of electric angles from 120 to 300 degrees where the V-phase induced voltage is positive is supplied to the field effect transistor Qvb, and with regard to the W-phase, a pulse width modulated signal PWMwb of a duty ratio calculated only in a range of electric angles from 240 to 420 degrees where the W-phase induced voltage is positive is supplied to the field effect transistor Qwb. Thus, it is possible to generate an electromagnetic brake force Bp by supplying a brake current by an induced voltage when the motor rotates clockwise; simultaneously, the brake current flows in the direction opposite to a current which generates torque during a clockwise rotation of the motor.

Similarly, for example, when the 3-phase brushless motor rotates counterclockwise, with regard to the U-phase, a pulse width modulated signal PWMub of a duty ratio calculated only in a range of electric angles from 180 to 360 degrees where the U-phase induced voltage is positive is supplied to the field effect transistor Qub, and with regard to the V-phase, a pulse width modulated signal PWMvb of a duty ratio calculated only in a range of electric angles from -60 to 120 degrees where the V-phase induced voltage is positive is supplied to the field effect transistor Qvb, and with regard to the W-phase, a pulse width modulated signal PWMwb of a duty ratio calculated only in a range of electric angles from 60 to 240 degrees where the W-phase induced voltage is positive is supplied to the field effect transistor Qwb. Thus, an electromagnetic brake force Bp is generated by supplying a brake current by an induced voltage when the motor rotates clockwise; simultaneously, the brake current flows in the direction opposite to a current which generates torque during a counterclockwise rotation of the motor.

Further, in the above embodiment, description has been made of a case where the electromagnetic brake force calculation maps in FIGS. 10A and 10B were used, but the characteristic curves L11 to L13 and L21 to L22 of the electromagnetic force calculation maps are for one specific vehicle, and therefore it is preferable to separately provide the characteristic curves to match characteristics of individual cars.

Further, in the above embodiment, description has been made of a case in which whether the steering direction is in the steering wheel turning direction or in the steering wheel returning direction is determined by whether or not the steering torque direction Dt coincides with the direction of motor angular velocity ωm, but the present invention is not limited to this method, and it is also possible to determine whether the steering direction is steered in a steering wheel turning direction Da which steered away from the neutral position or in a steering wheel returning direction Dr which steered back to the neutral position based on a motor rotating direction Dm and a steering angle θ.

The control arithmetic unit 23 need not be limited to the structure in FIG. 3, but any optional arithmetic processing unit may be applied.

Industrial Applicability

To stop the electric motor while the electric motor is generating a steering assist force to be applied to the steering system, at least either one of the running condition of the vehicle and the steering condition of the steering system is detected, and the electric motor is controlled in electromagnetic brake control in a manner to suppress the kick-back based on at least either one of detected running condition and steering condition. Therefore, it is possible to provide an electric power steering device that generates an optimum electromagnetic brake force based on at least either one of the running condition and the steering condition and thus offers a favorable steering feeling.

**Claims**

1. A electric power steering apparatus having a steering torque detecting means for detecting a steering torque transmitted to the steering system; an electric motor for generating a steering assist force to give to the steering system; a motor control means for controlling the electric motor based on at lease the steering torque, said apparatus comprising:

   a motor stop condition detecting means for detecting a condition to stop said electric motor while said electric motor is under control by said motor control means; and
   an electromagnetic brake control means over said electric motor in order to suppress a kick-back based on at least either one of a steering condition of said steering system and a running condition of the vehicle when a detection result by said motor stop condition detecting means shows that a condition occurs to stop said electric motor.

2. The electric power steering apparatus according to claim 1, wherein said electromagnetic brake control means includes a running condition detecting means for detecting if the vehicle is in a straight running state or in a turning state, and if, according to the detection result by said running state detecting means, the vehicle is in a straight running state, the generation of said electromagnetic brake force is stopped or if the vehicle is in a turning state, said electromagnetic brake force is generated.

3. The electric power steering apparatus according to claim 1 or 2, wherein said electromagnetic brake control means further comprises a steering state detecting means for detecting which is the steering condition, turning said steering wheel away from the central position or returning said steering wheel back to the central position, and when the steering condition detected by said steering condition detecting means is steering back to the central position, electromagnetic brake control by a large electromagnetic brake force or when the detected steering condition is turning said steering wheel, electromagnetic brake control is performed by a small electromagnetic brake force, which is a smaller braking force than the steering condition is returning said steering wheel.

4. The electric power steering apparatus according to one of claims 1 to 3, wherein said electromagnetic brake control means includes a steering velocity detecting means for detecting a steering velocity of the steering system, and controls said electromagnetic brake so that the electromagnetic brake force becomes weaker as the steering velocity detected by said steering velocity detecting means becomes faster.

5. The electric power steering apparatus according to one of claims 1 to 4, wherein said electromagnetic brake control means includes a turning radius detecting means for detecting a turning radius of the vehicle, and if, according to a detection result by said turning radius detecting means, the turning radius is small, controls said electromagnetic brake to generate a larger electromagnetic brake force than when the turning radius is large.

6. The electric power steering apparatus according to claim one of claims 1 to 5, wherein said electromagnetic brake control means releases electromagnetic brake control when electronic brake control has passed a predetermined length of time or when the detection result by said motor stop condition detecting means shows that a condition occurs that specifies that said electric motor is not to be stopped.

# F I G. 1

- 1
- 2
- 21 — VEHICLE SPEED SENSOR
- 2a
- 3 — TORQUE SENSOR
- 10
- 11 — REDUCTION GEAR
- 12 — 3-PHASE BRUSHLESS MOTOR
- T
- Vs
- STEERING ASSIST CONTROL UNIT — 20
- 2b
- 4
- 5
- 6
- 7
- 8
- 8a
- 8b
- 9
- 9

F I G. 2

EP 1 997 714 A1

# F I G. 4

*F I G.* 5

34

d-AXIS COMMAND CURRENT CALCULATING UNIT

51

$I_M{}^*$ → CONVERSION UNIT → $\omega b$

$\phi = a\cos(\omega b/\omega m)$

55

a cos CALCULATING UNIT → $\phi$ → sin CALCULATING UNIT

$\omega m = \omega e/p$

$\omega e$ → MECHANICAL ANGLE CALCULATING UNIT → $\omega m$

53

54

$\sin\phi$

ABSOLUTE VALUE UNIT → $|I_M{}^*|$ → MULTIPLIER × (−1) → $Id^* = -|I_M{}^*|\sin\phi$

52

56

*F I G.* 6

d-q AXIS VOLTAGE CALCULATING PROCESS START

READ ELECTRIC ANGLE $\theta e$ ⟵ S1

CALCULATE d-AXIS VOLTAGE ed($\theta$) AND q-AXIS VOLTAGE eq($\theta$) BY REFERRING TO d-q AXIS VOLTAGE CALCULATION MAP ⟵ S2

OUTPUT d-AXIS VOLTAGE ed($\theta$) AND q-AXIS VOLTAGE eq($\theta$) TO g-AXIS COMMAND CURRENT CALCULATING UNIT ⟵ S3

RETURN

## F I G. 7

eq(θ)

ed(θ)

ELECTRIC ANGLE θ e

## F I G. 8

U-PHASE EMF    V-PHASE EMF    W-PHASE EMF

ELECTRIC ANGLE θ e

## FIG. 9

## F I G. 1 0 A

TURNING OF
STEERING WHEEL

ELECTROMAGNETIC
BRAKE FORCE Bp

STRONG

——— STANDSTILL
—·— LARGE R
------- SMALL R

L11
L12
L13

WEAK

STEERING VELOCITY $\theta$ v

SLOW                    FAST

## F I G. 1 0 B

RETURNING OF
STEERING WHEEL

ELECTROMAGNETIC
BRAKE FORCE Bp

STRONG

——— STANDSTILL
—·— LARGE R
------- SMALL R

L21
L22
L23

WEAK

STEERING VELOCITY $\theta$ v

SLOW                    FAST

F I G. 1 1

# F I G . 1 2

# F I G. 1 3

CURRENT GENERATING
CLOCKWISE ROTATING
TORQUE

POWER SOURCE

CURRENT GENERATING BRAKE
FORCE TO CLOCKWISE
ROTATING MOTOR

CLOCKWISE
MOTOR ROTATION

Q1
=off

Q3
=off

M

65

Q2
=on

Q4
=off

GND

BRAKE CURRENT AND DIRECTION
OF ITS FLOW BY INDUCED VOLTAGE
WHEN Tr2 IS TURNED ON

DIRECTION OF INDUCED VOLTAGE
IN CLOCKWISE ROTATION OF MOTOR

## F I G. 1 4

POWER SOURCE

Qua
=off

Qub
=on/off

GND

MOTOR
ROTATES CW

M

12

**U-PHASE INDUCED VOLTAGE**

ELECTRIC ANGLE

360

180

+

−

BY TURNING ON Tr2 AT ELECTRIC ANGLES 0∼180 DEG WHERE
INDUCED VOLTAGE IS PLUS DURING CW STEERING, BRAKE
CURRENT FLOWS ONLY WHEN STEERING WHEEL IS TURNED CW

BY TURNING OFF Tr2 AT ELECTRIC ANGLES 180∼360 DEG WHERE
INDUCED VOLTAGE IS MINUS DURING CW STEERING, BRAKE
CURRENT DOES NOT FLOW WHEN STEERING WHEEL IS TURNED CW

**V-PHASE INDUCED VOLTAGE**

360

180

ELECTRIC ANGLE

+

−

BY TURNING ON Tr4 AT ELECTRIC ANGLES 120∼300 DEG WHERE
INDUCED VOLTAGE IS PLUS DURING CW STEERING, BRAKE
CURRENT FLOWS ONLY WHEN STEERING WHEEL IS TURNED CW

**W-PHASE INDUCED VOLTAGE**

180

360

ELECTRIC ANGLE

+

−

BY TURNING ON Tr6 AT ELECTRIC ANGLES 240∼420 DEG WHERE
INDUCED VOLTAGE IS PLUS DURING CW STEERING, BRAKE
CURRENT FLOWS ONLY WHEN STEERING WHEEL IS TURNED CW

EP 1 997 714 A1

# F I G. 1 5

BAT

43

RESISTANCE

PWM
CONTROLLER

FET GATE
DRIVE
CIRCUIT

3

3

24

MOTOR

12

25

ON/OFF
CONTROL
SIGNAL

70

<div style="text-align:center">**INTERNATIONAL SEARCH REPORT**</div>

| | International application No. |
|---|---|
| | PCT/JP2007/054893 |

**A. CLASSIFICATION OF SUBJECT MATTER**
*B62D6/00(2006.01)i, B62D5/04(2006.01)i, B62D101/00(2006.01)n, B62D113/00 (2006.01)n, B62D117/00(2006.01)n, B62D119/00(2006.01)n, H02P21/00 (2006.01)n, H02P27/04(2006.01)n*
According to International Patent Classification (IPC) or to both national classification and IPC

**B. FIELDS SEARCHED**

Minimum documentation searched (classification system followed by classification symbols)
B62D6/00, B62D5/04, B62D101/00, B62D113/00, B62D117/00, B62D119/00, H02P21/00, H02P27/04

Documentation searched other than minimum documentation to the extent that such documents are included in the fields searched
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 2001-163230 A  (Honda Motor Co., Ltd.),<br>19 June, 2001 (19.06.01),<br>Page 7, column 11, line 45 to column 12,<br>line 36; Figs. 2 to 4<br>(Family: none) | 1,2,6<br>3-5 |
| X<br>A | JP 2001-106108 A  (Koyo Seiko Co., Ltd.),<br>17 April, 2001 (17.04.01),<br>Page 4, column 6, line 5 to page 5, column 8,<br>line 28; Figs. 1, 2<br>(Family: none) | 1,3,6<br>2,4,5 |
| A | JP 61-215166 A  (Hitachi, Ltd.),<br>24 September, 1986 (24.09.86),<br>Full text; all drawings<br>& US 4753308 A1 | 1-6 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>09 April, 2007 (09.04.07) | Date of mailing of the international search report<br>15 May, 2007 (15.05.07) |
|---|---|
| Name and mailing address of the ISA/<br>Japanese Patent Office | Authorized officer |
| Facsimile No. | Telephone No. |

Form PCT/ISA/210 (second sheet) (April 2005)

**INTERNATIONAL SEARCH REPORT**

| International application No. |
| --- |
| PCT/JP2007/054893 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2-95976 A  (Jidosha Kiki Co., Ltd.),<br>06 April, 1990 (06.04.90),<br>Full text; all drawings<br>& US 5444622 A1 | 1-6 |
| A | JP 4-78770 A  (Mazda Motor Corp.),<br>12 March, 1992 (12.03.92),<br>Full text; all drawings<br>(Family: none) | 1-6 |

Form PCT/ISA/210 (continuation of second sheet) (April 2005)

**EP 1 997 714 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3399226 B